# EUROPÄISCHE PATENTSCHRIFT

(11) **EP 2 424 955 B1**
(45) Veröffentlichungstag und Bekanntmachung des Hinweises auf die Patenterteilung: **05.09.2012**
(21) Anmeldenummer: 11738428.9
(22) Anmeldetag: 15.07.2011
(51) Int. Cl.: C10B 7/02, C10B 49/02, C10B 53/02, C10L 5/40, C10L 9/08, F26B 17/00, F26B 23/02, F27B 9/18

(54) **VORRICHTUNG UND VERFAHREN ZUR TROCKNUNG UND TORREFIZIERUNG VON WENIGSTENS EINEM KOHLENSTOFFHALTIGEN STOFFSTROM IN EINEM ETAGENOFEN**
DEVICE AND METHOD FOR DRYING AND TORREFYING AT LEAST ONE CARBON-CONTAINING SUBSTANCE STREAM IN A MULTIPLE-HEARTH FURNACE
DISPOSITIF ET PROCÉDÉ DE SÉCHAGE ET DE TORRÉFACTION D'AU MOINS UN FLUX DE MATIÈRE CARBONÉ DANS UN FOUR À ÉTAGES

(30) Priorität: 15.07.2010 DE 102010036425
(43) Veröffentlichungstag der Anmeldung: 07.03.2012
(73) Patentinhaber: ThyssenKrupp Polysius AG, 59269 Beckum (DE)
(72) Erfinder: LAMPE, Karl, 59320 Ennigerloh (DE); DENKER, Jürgen, 59269 Beckum (DE); BEYER, Christoph, 48147 Münster (DE); ERPELDING, Richard, 59494 Soest (DE)
(74) Vertreter: Tetzner, Michael
(86) Internationale Anmeldenummer: PCT/EP2011/062131
(87) Internationale Veröffentlichungsnummer: WO 2012/007574

(56) Entgegenhaltungen:
- EP-A1- 2 189 512
- US-A1- 2010 083 530
- US-A1- 2010 242 351
- JAMES R ARCATE: "Global markets and technologies for torrefied wood in 2002", WOOD ENERGY, ITEBE, LONS-LE-SAUNIER, FR, 1. Juli 2002 (2002-07-01), Seiten 26-28, XP002292486, ISSN: 1811-2722

## Beschreibung

Die Erfindung betrifft eine Vorrichtung und ein Verfahren zur Trocknung und Torrefizierung von wenigstens einem kohlenstoffhaltigen Stoffstrom in einem Etagenofen.

Unter der Torrefizierung bezeichnet man die thermische Behandlung von Biomasse unter Luftabschluss bei relativ niedrigen Temperaturen von 250° bis 300°C durch pyrolytische Zersetzung.

Aus der US 4,347,156 ist ein Verfahren zur Reaktivierung von Aktivkohle in einem Etagenofen bekannt, dem eine Trocknungszone vorgeschaltet ist. Dabei wird aus dem Etagenofen ein Gasstrom abgezweigt und einem Nachbrenner zur Verbrennung zugeführt. Das dabei entstehende Abgas wird dem Trockner zugeführt, der sowohl als direkter oder indirekter Wärmetauscher betrieben werden kann.

Eine weitere Vorrichtung zur Torrefizierung ist in der WO 2005/056723 A1 offenbart. Auch dort werden der Torrefizierungsstufe entzogene Gase zum Trockner zurückgeführt bzw. als Heißgas in die Torrefizierungszone rezirkuliert.

Weiterhin ist aus der EP 2 017 325 A2 eine Vorrichtung zur Zersetzung von Biomasse und zur Erzeugung eines Brenngases bekannt, wobei die Biomasse in einer Trocknungszone getrocknet und in einer Torrefizierungszone entgast wird. Schließlich wird das so behandelte Material zunächst zerkleinert und dann einer Pyrolysestufe zugeführt. Ein Teil des Wasserdampf enthaltenden Trocknungs-Gasstroms aus dem Trockner wird abgeführt und in einem Wärmetauscher erhitzt und dann zumindest teilweise wieder dem Trockner zugeführt.

Aus der EP 2 189 512 A1 ist eine Vorrichtung sowie ein Verfahren zur Trocknung und Torrefizierung von Biomasse in einem Etagenofen bekannt, wobei die Trocknungszone einen Auslass zum Abführen eines Wasserdampf enthaltenden Trocknungs-Gasstroms und die Torrefizierungszone einen Auslass für einen Torrefizierungs-Gasstrom enthält. Weiterhin erfolgt die Aufheizung im Etagenofen mittels heißer Gase und die abgezogenen Gase können zur Verwertung einem Brenner zugeführt werden.

Die US 2010/0083530 A1 beschreibt ein Verfahren und eine Anlage zur Torrefizierung von Zellulosematerial in einer inerten Atmosphäre. Das zu behandelnde Material wird einer aus mehreren Etagen bestehenden Prozesskammer zugeführt und nach Behandlung als torrefiziertes Material ausgeschleust. Ein dampfhaltiges Abgas wird aus der Prozesskammer abgeführt und zum Teil über einen Kondensor einem Brenner zugeführt, dessen heißes Abgas zum Erhitzten des verbleibenden Teils der dampfhaltigen Abgases verwendet wird, bevor der erhitzte verbleibende Teil des dampfhaltigen Abgases wieder in die Prozesskammer zurückgeführt wird.

Der Erfindung liegt die Aufgabe zugrunde, die Vorrichtung und das Verfahren zur Trocknung und Torrefizierung von wenigstens einem kohlenstoffhaltigen Stoffstrom effizienter zu gestalten.

Erfindungsgemäß wird diese Aufgabe durch die Merkmale der Ansprüche 1 und 7 gelöst.

Die erfindungsgemäße Vorrichtung zur Trocknung und Torrefizierung von wenigstens einem kohlenstoffhaltigen Stoffstrom in einem Etagenofen besteht im Wesentlichen aus
einer Trocknungszone, die eine Zuführeinrichtung zum Zuführen eines kohlenstoffhaltigen Stoffstroms, einen Auslass zum Abführen eines Wasserdampf enthaltenden Trocknungs-Gasstroms und einen Einlass zum Rückführen wenigstens eines Teils des Trockungs-Gasstroms aufweist,
einer Torrefizierungszone zur Entgasung des in der Trocknungszone getrockneten Stoffstroms, die einen Auslass zum Ausschleusen eines torrefizierten Stoffstroms, wenigstens einen Einlass für ein Abgas und einen Auslass für einen Torrefizierungs-Gasstrom,
einem Wärmetauscher zum Aufheizen des Trocknungs-Gasstroms, wobei der Auslass der Trocknungszone über den Wärmetauscher mit dem Einlass der Trocknungszone in Verbindung steht,
einem Verbrennungsaggregat, wobei der Auslass der Torrefizierungszone über das Verbrennungsaggregat und den Wärmetauscher mit dem Einlass der Torrefizierungszone verbunden ist,
wobei ein über den Auslass der Torrefizierungszone abgeführter Torrefizierungs-Gasstrom im Verbrennungsaggregat verbrannt und das dabei entstehende Abgas im Wärmetauscher zum Aufheizen des Trocknungs-Gasstroms genutzt und der Torrefizierungszone zugeführt wird,
wobei der aus der Torrefizierungszone abgeführte Torrefizierungsgasstrom im Verbrennungsaggregat verbrannt und aufgeheizt wird und das dabei entstehende Abgas im Wärmetauscher auf die Torrefizierungstemperatur abgekühlt und der Torrefizierungszone zugeführt wird,
wobei die Trocknungszone und die Torrefizierungszone zwei voneinander getrennte Gaskreisläufe aufweisen.

Beim erfindungsgemäßen Verfahren zur Trocknung und Torrefizierung von wenigstens einem kohlenstoffhaltigen Stoffstrom in einem Etagenofen wird die Biomasse in einer Trocknungszone mittels eines Trocknungs-Gasstrom getrocknet und anschließend in einer Torrefizierungszone torrefiziert. Dabei wird ein Teil des Wasserdampf enthaltenden Trocknungs-Gasstrom aus der Trocknungszone abgeführt und in einem Wärmetauscher erhitzt und dann zumindest teilweise wieder in die Trocknungszone zurückgeführt. Weiterhin wird ein Teil eines in der Torrefizierungszone entstehenden Torrefizierungs-Gasstrom aus der Torrefizierungszone abgeführt und einem Verbrennungsaggregat zur Verbrennung zugeführt, wobei das dabei entstehende Abgas zum Erhitzen des Trocknungs-Gasstroms im Wärmetauscher genutzt und in die Torrefizierungszone eingeführt wird. Dabei wird der aus der Torrefizierungszone abgeführte und im Verbrennungsaggregat verbrannte Torrefizierungsgasstrom aufgeheizt und das dabei entstehende Abgas im Wärmetauscher auf die erforderliche Torrefizierungstemperatur abgekühlt und der Torrefizierungszone zugeführt, Weiterhin werden die Trocknungszone und die Torrefizierungszone mit zwei voneinander getrennten Gaskreisläufen betrieben.

Entgegen den bisher aus der Praxis bekannten Verfahren wird nicht das Torrefizierungsgas, sondern das bei der Verbrennung des Torrefizierungsgases in einem Verbrennungsaggregat entstehende Abgas in die Torrefizierungszone eingeführt. Das Abgas hat somit eine völlig andere Zusammensetzung, das keine flüchtigen oder kondensierbaren Bestandteile enthält und damit den Stoffübergang bei der Torrefizierung begünstigt. Durch die Verbrennung der bei der Torrefizierung entstehenden Flüchtigen wird das Abgas bevor es in die Torrefizierungszone eingeführt wird mit CO₂ und H₂O-Dampf angereichert. CO₂ und H₂O-Dampf sind strahlungaktive Gaskomponenten und begünstigen den Wärmeübergang in der Torrefizierungszone und steigern die Effizienz der Torrefizierung

Durch die Trennung der beiden Gaskreisläufe kann der energetische Vorteil, der sich aus der Nachverbrennung des Torrefizierungs-Gasstrom und der Nutzung der dabei entstehenden Wärme zur Erhitzung des Trocknungs-Gasstroms genutzt werden. Weiterhin ist die Trocknung besonders effizient, wenn der Trocknungs-Gasstrom nicht mit den Abgasen der Torrefizierungszone und der Nachverbrennung vermischt wird. Eine weitere Steigerung lässt sich vor allem dann erzielen, wenn der Wasserdampf enthaltende Trocknungs-Gasstrom im Wärmetauscher überhitzt wird. Außerdem kann vorgesehen werden, das der Trocknungs-Gasstrom im Gaskreislauf gefiltert wird.

Weiterhin ist lediglich ein Wärmetauscher für die beiden in die Trocknungszone bzw. Torrefizierungszone eingeführten Gasströme erforderlich und beide den Wärmetauscher durchströmenden Gasströme werden anschließend im Etagenofen genutzt. Hierdurch ergibt sich eine besonderes effiziente Trocknung und Torrefizierung eines kohlenstoffhaltigen Stoffstroms.

Weitere Ausgestaltungen der Erfindung sind Gegenstand der Unteransprüche.

Gemäß einer bevorzugten Ausgestaltung der Erfindung besteht die Trocknungs-Zone und/oder die Torrefizierungszone jeweils aus mehreren, übereinander angeordneten Herden. Als Transportmittel kommen beispielsweise sogenannte Krählarme zur Anwendung. Zwischen der Trocknungszone und der Torrefizierungszone kann weiterhin eine mechanische Übergabeeinrichtung für die Übergabe des getrockneten, kohlenstoffhaltigen Stoffstrom vorgesehen werden, die vorzugsweise gasdicht ausgebildet ist, um die Vermischung der beiden Gaskreisläufe zu verhindern.

Weiterhin hat es sich als besonders effizient herausgestellt, wenn die Trocknungszone im Gleichstrom und die Torrefizierungszone im Gegenstrom (Stoffstrom/Gasstrom) betrieben werden.

Die Temperatur des kohlenstoffhaltigen Stoffstroms beim Übergang in die Torrefizierungszone beträgt zweckmäßigerweise weniger als 150°C.

Bei den der Erfindung zugrundeliegenden Versuchen hat es sich als vorteilhaft herausgestellt, wenn die rückgeführte Dampfmenge in Trocknerkreislauf so groß ist, dass sich eine inerte Atmosphäre mit einem Sauerstoffgehalt von <10%, vorzugsweise <8%, einstellt. Weiterhin sollte die rückgeführte Abgasmenge im Torrefizierungs-Kreislauf so groß sein, dass eine inerte Atmosphäre mit einem Sauerstoffgehalt von weniger als 10%, vorzugsweise weniger als 8%, eingestellt werden kann.

Außerdem ist es vorteilhaft, wenn die Temperatur des in die Torrefizierungszone rückgeführten Abgases mehr als 300°C beträgt und die Temperaturen des rückgeführten Trocknungs-Gasstroms im Bereich von 150° bis 300°C, vorzugsweise im Bereich von 200°C bis 300°C, eingestellt wird.

Eine Regelung der Verweilzeit des Materials in den beiden Zonen kann dadurch geregelt werden, dass in der Trocknungszone und/oder Torrefizierungszone die Temperatur und/oder der Gasfluss und/oder die Gasmenge und/oder der Druck gemessen werden.

Die Verweilzeit in der Trocknungs- und Torrefizierungszone kann durch Veränderung der Anzahl der Herde, durch Reduktion von Herdflächen, durch Veränderung des Designs und der Anzahl der Transportvorrichtungen (beispielsweise Krählarme und Krählzähne) oder durch eine Variation der Drehzahl von Transportvorrichtungen (beispielsweise Krählarme) eingestellt werden.

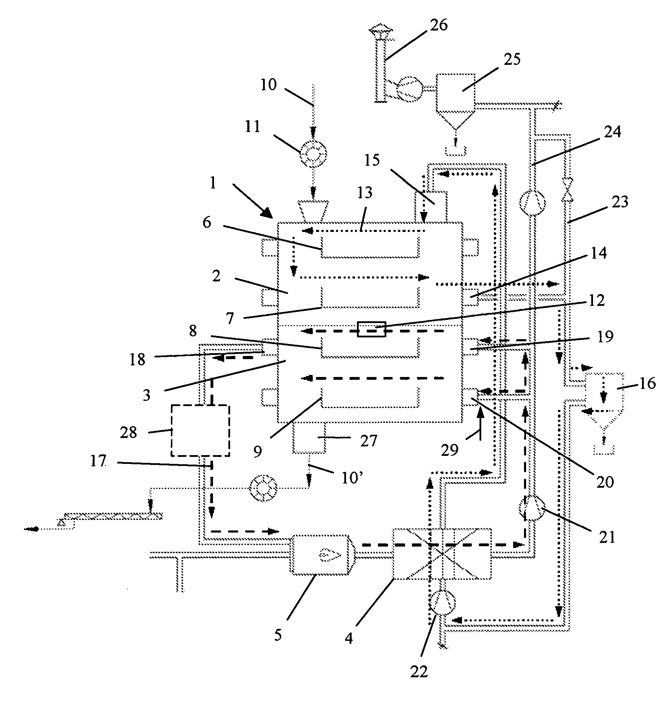

Weitere Vorteile und Ausgestaltungen der Erfindung werden im Folgenden anhand der Beschreibung und der Zeichnung näher erläutert.

Die Zeichnung zeigt ein Blockschaltbild der erfindungsgemäßen Vorrichtung zur Trocknung und Torrefizierung von wenigstens einem kohlenstoffhaltigen Stoffstrom in einem Etagenofen.

Die Vorrichtung zur Trocknung und Torrefizierung von wenigstens einem kohlenstoffhaltigen Stoffstrom besteht im Wesentlichen aus einem Etagenofen 1 mit einer Trocknungszone 2 und einer Torrefizierungszone 3, einem Wärmetauscher 4 und einem Verbrennungsaggregat 5, welches insbesondere durch einen Brenner oder eine Brennkraftmaschine gebildet werden kann.

In der Trocknungs- und Torrefizierungszone 2, 3 sind jeweils mehrere Herde 6, 7 bzw. 8, 9 vorgesehen. Das zu behandelnde Material, nämlich ein kohlenstoffhaltiger Stoffstrom 10, wird über eine Zuführeinrichtung 11 von oben der Trocknungszone 2 zugeführt. Der Materialtransport auf den Herden erfolgt über übliche Transporteinrichtungen, wie beispielsweise rotierende Krählarme, die das Material zu innen- oder außen liegenden Öffnungen transportieren, wo das Material auf den nächst tieferen Herd fällt. Die Trocknung des Stoffstroms 10 in der Trocknungszone 2 erfolgt mit Hilfe eines Trocknungs-Gasstrom 13, der in der Zeichnung mit gepunkteten Pfeilen dargestellt ist. Der Wärmetauscher weist einen ersten Eingang 4a und einen damit verbundenen ersten Ausgang 4b sowie einen zweiten Eingang 4c und einen damit verbundenen zweiten Ausgang 4d aufweist, wobei der erste Eingang 4a mit einem Auslass 14 der Trocknungszone (2) und der erste Ausgang 4b mit einem Einlass 15 der Trocknungszone 2 verbunden ist, sodass der Wasserdampf enthaltende Trocknungs- Gasstrom 13 wird über den Auslass 14 abgeführt, im Wärmetauscher 4 erhitzt und über den Einlass 15 der Trocknungszone 2 wieder zugeführt werden kann.

Der im Trocknungs-Gasstrom enthaltene Wasserdampf wird im Wärmetauscher 4 zweckmäßigerweise überhitzt, wodurch eine besonders effiziente Trocknung in der Trocknungszone 2 erreicht werden kann. Je nach Stoffstrom, bei dem es sich beispielsweise um Holz, Holzabfälle, landwirtschaftliche Produkte, wie Stroh, Reisschalen, Nussschalen, Energiegräser oder Abfälle aus der Lebensmittelindustrie (Bier-, Wein-, Zuckerherstellung) handelt, kann es zweckmäßig sein, zwischen dem Auslass 14 und dem Wärmetauscher 4 einen Filter 16 vorzusehen, um den im Trocknungs-Gasstrom vorhandenen Staub abzuscheiden, wodurch die Effizienz des Wärmetauschers 4 verbessert werden kann.

Der in der Torrefizierungszone 3 entstehende Torrefizierungs-Gasstrom 17 (gestrichelt dargestellte Pfeile) wird über einen Auslass 18 abgeführt und dem Verbrennungsaggregat 5 zur Verbrennung zugeführt, wobei ein Kondensator 27 zwischengeschaltet sein kann. Der aus der Torrefizierungszone 3 abgeführte Torrefizierungs-Gasstroms 17 wird dann vor dem Zuführen in das Verbrennungsaggregat 5 in den Kondensator 28 eingetragen, in welchem die kondensierbaren Bestandteile zumindest teilweise niedergeschlagen werden und die nicht kondensierbaren Bestandteile zur Verbrennung dem Verbrennungsaggregat zugeführt werden.

Dem Verbrennungsaggregat 5 kann selbstverständlich weiterer Brennstoff und/oder Verbrennungsluft aufgegeben werden. Ist das Verbrennungsaggregat als Brennkraftmaschine ausgebildet, kann die Energie des Torrefizierungs-Gasstroms 17 durch Verbrennung teilweise in mechanische Energie umgesetzt werden. Das im Verbrennungsaggregat 5 entstehende Abgas, welches weiterhin mit gestrichelten Pfeilen dargstellt ist, wird dem zweiten Eingang 4c des Wärmetauschers 4 zur indirekten Erhitzung des Trocknungs-Gasstrom 13 zugeführt, über den zweiten Ausgang 4d abgeführt und über den Einlass 19 und/oder 20 der Torrefizierungszone 3 zugeführt. Die Aufrechterhaltung der beiden Gaskreisläufe erfolgt über Ventilatoren 21 bzw. 22. Optional kann das Abgas vor dem Eintritt in die Torrefizierungszone 3 mit Heißdampf 29 angereichert werden, um die Torrefizierung zu intensivieren und den Wärme- und Stoffaustausch zu verbessern.

Für das Herunterfahren der Anlage und in einem Notfall kann eine Fackel vorgesehen werden, um den Torrefizierungs-Gasstroms 17 zu verbrennen. Ansonsten werden überschüssige Mengen des Trocknungs-Gasstroms 13 bzw. Torrefizierungs-Gasstroms 17 über Leitungen 23 bzw. 24, einem Filter 25 und einem Kamin 26 abgeführt.

Der in der Torrefizierungszone 3 torrefizierte Stoffstrom 10' wird über einen Auslass 27 ausgeschleust, um dann ggf. zerkleinert, brikettiert oder in sonstiger Art und Weise weiter verarbeitet zu werden.

Zwischen der Trocknungszone 2 und der Torrefizierungszone 3 ist eine Übergabeeinrichtung 12 zur Übergabe des getrockneten, kohlenstoffhaltigen Stoffstroms von der Trocknungszone 2 zur Torrefizierungszone 3 vorgesehen. Diese Übergabeeinrichtung ist gasdicht ausgebildet, um eine Vermischung des Trocknungsgasstrom 13 mit dem Torrefizierungs-Gasstrom 17 zu verhindern.

Die Temperatur des in die Torrefizierungszone 3 rückgeführten Torrefizierungs-Gasstroms 17 beträgt vorzugsweise mehr als 300°C, während die Temperatur des rückgeführten Trocknungs-Gasstrom 13 im Bereich von 150°C bis 300°C, vorzugsweise im Bereich von 200°C bis 300°C eingestellt wird.

Damit die Torrefizierung erst in der Torrefizierungszone stattfindet, sollte die Temperatur des kohlenstoffhaltigen Stoffstroms 10 beim Übergang in die Torrefizierungszone 3 weniger als 150°C.

Über geeignete Sensoren in der Trocknungs- und/oder Torrefizierungszone 2, 3 können wahlweise die Temperatur und/oder der Gasfluss und/oder die Gasmenge und/oder der Druck gemessen und zur Regelung der Verweilzeit des kohlenstoffhaltigen Stoffstroms 10 in den beiden Zonen verwendet werden. Die Verweilzeit in der Trocknungs- und Torrefizierungszone 2, 3 kann beispielsweise durch Veränderung der Anzahl der Herde, durch Reduktion der effektiven Herdflächen oder durch Variation der Drehzahl von Transporteinrichtungen eingestellt, bzw. angepasst werden.

Der Etagenofen weist Transportvorrichtungen zum Transport des Stoffstroms 10 auf, die über eine Antriebswelle angetrieben werden, wobei die Antriebswelle zwischen der Trocknungs- und Torrefizierungszone 2, 3 zweckmäßigerweise geteilt und mit jeweils einem eigenen Antrieb ausgestattet ist, um die Verweilzeiten des kohlenstoffhaltigen Stoffstroms 10 in den beiden Zonen unabhängig voneinander über die jeweilige Drehzahl verändern zu können.

Durch die Trennung der beiden Gaskreisläufe kann eine sehr effiziente Trocknung des Stoffstroms in der Trocknungszone mit überhitzten Dampf stattfinden. Auch die Rückführung des Torrefizierungs-Gasstroms 17 vom Wärmetauscher 4 zurück in die Torrefizierungszone 3 wirkt sich energetisch äußerst vorteilhaft aus. Insgesamt ergibt sich dadurch ein sehr effizientes Verfahren zur Trocknung und Torrefizierung von wenigstens einem kohlenstoffhaltigen Stoffstrom in einem Etagenofen.

## Patentansprüche

1. Vorrichtung zur Trocknung und Torrefizierung von wenigstens einem kohlenstoffhaltigen Stoffstrom (10) in einem Etagenofen (1) mit
a. einer Trocknungszone (2), die eine Zuführeinrichtung (11) zum Zuführen eines kohlenstoffhaltigen Stoffstroms (10), einen Auslass (14) zum Abführen eines Wasserdampf enthaltenden Trocknungs-Gasstroms (13) und einen Einlass (15) zum Rückführen wenigstens eines Teils des Trockungs-Gasstroms aufweist,
b. einer Torrefizierungszone (3) zur Entgasung des in der Trocknungszone (2) getrockneten Stoffstroms, die einen Auslass (27) zum Ausschleusen eines torrefizierten Stoffstroms (10'), wenigstens einen Einlass (19, 20) für ein Abgas und einen Auslass (18) für einen Torrefizierungs-Gasstrom (17),
c. einem Wärmetauscher (4) zum Aufheizen des Trocknungs-Gasstroms (13), wobei der Auslass (14) der Trocknungszone über den Wärmetauscher mit dem Einlass (15) der Trocknungszone in Verbindung steht,
d. einem Verbrennungsaggregat (5), wobei der Auslass (18) der Torrefizierungszone (3) über das Verbrennungsaggregat (5) und den Wärmetauscher (4) mit dem Einlass (19, 20) der Torrefizierungszone (3) verbunden ist,
e. wobei ein über den Auslass (18) der Torrefizierungszone (3) abgeführte Torrefizierungs-Gasstrom (17) im Verbrennungsaggregat (5) verbrannt und das dabei entstehende Abgas im Wärmetauscher (4) zum Aufheizen des Trocknungs-Gasstroms (13) genutzt und der Torrefizierungszone (3) zugeführt wird,
f. wobei die Trocknungszone (2) und die Torrefizierungszone (3) zwei voneinander getrennte Gaskreisläufe aufweisen.

2. Vorrichtung nach Anspruch 1, **dadurch gekennzeichnet, dass** der Wärmetauscher einen ersten Eingang (4a) und einen damit verbundenen ersten Ausgang (4b) sowie einen zweiten Eingang (4c) und einen damit verbundenen zweiten Ausgang (4d) aufweist, wobei der erste Eingang (4a) mit dem Auslass (14) der Trocknungszone (2) und der erste Ausgang (4b) mit dem Einlass (15) der Trocknungszone (2) verbunden ist und weiterhin der zweite Eingang (4c) über das Verbrennungsaggregat (5) mit dem Auslass (18) der Torrefizierungszone (3) und der zweite Ausgang (4b) mit dem Einlass (19, 20) der Torrefizierungszone (3) verbunden ist.

3. Vorrichtung nach Anspruch 1, **dadurch gekennzeichnet, dass** die Trocknungszone (2) und/oder die Torrefizierungszone (3) mehrere übereinander angeordnete Herde (6, 7, 8, 9) aufweisen.

4. Vorrichtung nach Anspruch 1, **dadurch gekennzeichnet, dass** zwischen der Trocknungs- und der Torrefizierungszone (2, 3) eine mechanische Übergabeeinrichtung für die Übergabe des getrockneten, kohlenstoffhaltigen Stoffstroms vorgesehen ist.

5. Vorrichtung nach Anspruch 4, **dadurch gekennzeichnet, dass** die Übergabeeinrichtung (12) zwischen der Trocknungs- und Torrefizierungszone (2, 3) gasdicht ausgebildet ist, um eine Vermischung der beiden Gaskreisläufe zu verhindern.

6. Vorrichtung nach Anspruch 1, **dadurch gekennzeichnet, dass** der Etagenofen Transportvorrichtungen zum Transport des Stoffstroms (10) aufweist, die über eine Antriebswelle angetrieben werden, wobei die Antriebswelle zwischen der Trocknungs- und Torrefizierungszone (2, 3) geteilt ist und mit jeweils einem eigenen Antrieb ausgestattet ist, um die Verweilzeiten des kohlenstoffhaltigen Stoffstroms (10) in den beiden Zonen unabhängig voneinander über die jeweilige Drehzahl verändern zu können.

7. Verfahren zur Trocknung und Torrefizierung von wenigstens einem kohlenstoffhaltigen Stoffstrom (10) in einem Etagenofen (1), wobei
a. die Biomasse in einer Trocknungszone (2) mittels eines Trocknungs-Gasstroms (13) getrocknet und anschließend in einer Torrefizierungszone (3) torrefiziert wird,
b. ein Teil des Wasserdampf enthaltenden Trockungs-Gasstroms aus der Trocknungszone abgeführt und in einem Wärmetauscher (4) erhitzt und dann zumindest teilweise wieder in die Trocknungszone (2) zurückgeführt wird, wobei
c. ein Teil eines in der Torrefizierungszone (3) entstehenden Torrefizierungs-Gasstroms (17) aus der Torrefizierungszone (3) abgeführt und einem Verbrennungsaggregat (5) zur Verbrennung zugeführt wird, wobei das dabei entstehende Abgas zum Erhitzen des Trocknungs-Gasstroms im Wärmetauscher (4) genutzt und in die Torrefizierungszone (3) eingeführt wird und
d. die Trocknungszone (2) und die Torrefizierungszone (3) mit zwei voneinander getrennten Gaskreisläufen betrieben werden.

8. Verfahren nach Anspruch 7 **dadurch gekennzeichnet, dass** die Trocknungszone (2) im Gleichstrom betrieben wird.

9. Verfahren nach Anspruch 7, **dadurch gekennzeichnet, dass** die Torrefizierungszone (3) im Gegenstrom betrieben wird.

10. Verfahren nach Anspruch 7, **dadurch gekennzeichnet, dass** der Wasserdampf enthaltende Trockungs-Gasstrom (13) im Wärmetauscher (4) überhitzt wird und die rückgeführte Dampfmenge im Trocknerkreislauf so groß ist, dass eine inerte Atmosphäre mit einem Sauerstoffgehalt von < 10 %eingestellt wird.

11. Verfahren nach Anspruch 7, **dadurch gekennzeichnet, dass** die in die Torrefizierungszone (3) eingeführte Abgasmenge so groß ist, dass sich in der Torrefizierungszone (3) eine inerte Atmosphäre mit einem Sauerstoffgehalt von < 10 % eingestellt wird.

12. Verfahren nach Anspruch 7, **dadurch gekennzeichnet, dass** die Temperatur des in die Torrefizierungszone eingeführten Abgases mehr als 300°C beträgt und die Temperatur des rückgeführten Trockungs-Gasstroms im Bereich von 150°C bis 300°C eingestellt wird.

13. Verfahren nach Anspruch 7 **dadurch gekennzeichnet, dass** der aus der Torrefizierungszone (3) abgeführte Torrefizierungs-Gasstroms (17) vor dem Zuführen in das Verbrennungsaggregat in einen Kondensator (28) eingetragen wird, in welchem die kondensierbaren Bestandteile zumindest teilweise niedergeschlagen werden und die nicht kondensierbaren Bestandteile im Verbrennungsaggregat (5) verbrannt werden.

14. Verfahren nach Anspruch 7, **dadurch gekennzeichnet, dass** in der Trocknungs-und/oder Torrefizierungszone (2, 3) die Temperatur und/oder der Gasfluss und/oder die Gasmenge und/oder der Druck gemessen und zur Regelung der Verweilzeit des Materials in den beiden Zonen verwendet wird.

15. Verfahren nach Anspruch 7, **dadurch gekennzeichnet, dass** die Verweilzeit in der Trocknungs- und Torrefizierungszone (2, 3) durch Veränderung der Anzahl von Herden, durch Reduktion von Herdflächen, durch Veränderung des Designs und der Anzahl der Transportvorrichtungen oder durch Variation der Drehzahl von Transportvorrichtungen eingestellt wird.

## Claims

1. A device for drying and torrefaction of at least one carbon-containing material flow (10) in a multiple-hearth furnace (1), comprising
a. a drying zone (2), which comprises a feed device (11) for feeding a carbon-containing material flow (10), a discharge point (14) for discharging a drying gas flow (13) containing water vapour and an infeed point (15) for recycling at least a part of the drying gas flow,
b. a torrefaction zone (3) for degassing the material flow dried in the drying zone (2), which comprises a discharge point (27) for discharging a torrefied material flow (10'), at least one infeed point (19, 20) for an exhaust gas and a discharge point (18) for a torrefaction gas flow (17),
c. a heat exchanger (4) for heating the drying gas flow (13), the discharge point (14) of the drying zone being connected via the heat exchanger to the infeed point (15) of the drying zone,
d. a combustion assembly (5), wherein the discharge point (18) of the torrefaction zone (3) is connected via the combustion assembly (5) and the heat exchanger (4) to the infeed point (19, 20) of the torrefaction zone (3),
e. wherein a torrefaction gas flow (17) discharged via the discharge point (18) of the torrefaction zone (3) is combusted in the combustion assembly (5) and the resulting exhaust gas is used in the heat exchanger (4) to heat the drying gas flow (13) and is fed to the torrefaction zone (3),
f. wherein the drying zone (2) and the torrefaction zone (3) comprise two separate gas circulations.

2. A device according to claim 1, **characterised in that** the heat exchanger comprises a first inlet (4a) and a first outlet (4b) connected thereto, as well as a second inlet (4c) and a second outlet (4d) connected thereto, the first inlet (4a) being connected to discharge point (14) of the drying zone (2) and the first outlet (4b) being connected to the infeed point (15) of the drying zone (2), and furthermore the second inlet (4c) is connected via the combustion assembly (5) to the discharge point (18) of the torrefaction zone (3) and the second outlet (4b) is connected to the infeed point (19, 20) of the torrefaction zone (3).

3. A device according to claim 1, **characterised in that** the drying zone (2) and/or the torrefaction zone (3) each comprise a plurality of hearths (6, 7, 8, 9) arranged one above the other.

4. A device according to claim 1, **characterised in that** a mechanical transfer device for transferring the dried, carbon-containing material flow is provided between the drying zone (2) and the torrefaction zone (3).

5. A device according to claim 4, **characterised in that** the transfer device (12) between the drying and torrefaction zone (2, 3) is of gas-tight construction in order to prevent mixing of the two gas circulations.

6. A device according to claim 1, **characterised in that** the multiple-hearth furnace comprises transport devices for transporting the material flow (10), which are driven via a drive shaft, which is divided between the drying zone and torrefaction zone (2, 3) and is equipped with a separate drive for each zone in order to be able to change the residence times of the carbon-containing material flow (10) in the two zones independently of one another by way of the respective speed of rotation.

7. A method for drying and torrefaction of at least one carbon-containing material flow (10) in a multiple-hearth furnace (1), wherein
a. the biomass is dried in a drying zone (2) by means of a drying gas flow (13) and is subsequently torrefied in a torrefaction zone (3),
b. part of the drying gas flow containing water vapour is discharged from the drying zone and heated in a heat exchanger (4) and then at least partially recycled to the drying zone (2),
wherein
c. part of a torrefaction gas flow (17) evolving in the torrefaction zone (3) is discharged from the torrefaction zone (3) and fed to a combustion assembly (5) for combustion, wherein the resulting exhaust gas is used to heat the drying gas flow in the heat exchanger (4) and is introduced into the torrefaction zone (3), and
d. the drying zone (2) and the torrefaction zone (3) are operated with two separate gas circulations.

8. A method according to claim 7, **characterised in that** the drying zone (2) is operated cocurrently.

9. A method according to claim 7, **characterised in that** the torrefaction zone (3) is operated countercurrently.

10. A method according to claim 7, **characterised in that** the water vapour-containing drying gas flow (13) is superheated in the heat exchanger (4) and the amount of steam recycled in the drier circulation is so large that an inert atmosphere having an oxygen content of <10% is set.

11. A method according to claim 7, **characterised in that** the amount of exhaust gas introduced into the torrefaction zone (3) so large that an inert atmosphere having an oxygen content of < 10% is set in the torrefaction zone (3).

12. A method according to claim 7, **characterised in that** the temperature of the exhaust gas introduced into the torrefaction zone is more than 300°C and the temperature of the recycled drying gas flow is set within the range from 150°C to 300°C.

13. A method according to claim 7, **characterised in that** before being fed into the combustion assembly, the torrefaction gas flow (17) discharged from the torrefaction zone (3) is introduced into a condenser (28), in which the condensable constituents are at least partially precipitated and the non-condensable constituents are combusted in the combustion assembly (5).

14. A method according to claim 7, **characterised in that** in the drying zone and/or torrefaction zone (2, 3) the temperature and/or the gas flow and/or the gas amount and/or the pressure are measured and used for controlling the residence time of the material in the two zones.

15. A method according to claim 7, **characterised in that** the residence time in the drying zone and torrefaction zone (2, 3) is adjusted by changing the number of hearths, by reducing hearth areas, by changing the design and the number of transport devices or by varying the speed of rotation of transport devices.

## Revendications

1. Dispositif de séchage et de torréfaction d'au moins un flux de matière carbonée (10) dans un four à soles multiples (1), avec
a) une zone de séchage (2), qui est dotée d'un système d'alimentation (11) pour l'alimentation en flux de matière carbonée (10), une sortie (14) pour l'évacuation d'un flux de gaz de séchage (13), qui contient de la vapeur d'eau, et une entrée (15) pour le recyclage d'au moins une partie du flux de gaz de séchage,
b) une zone de torréfaction (3), qui, destinée au dégazage du flux de matière séchée dans la zone de séchage (2), est dotée d'une sortie (27) pour l'évacuation d'un flux de matière torréfiée (10'), d'au moins une entrée (19, 20) pour un effluent gazeux et d'une sortie (18) pour un flux de gaz de torréfaction (17),
c) un échangeur thermique (4) pour chauffer le courant de gaz de séchage (13), sachant que la sortie (14) de la zone de séchage est en communication avec l'entrée (15) de la zone de séchage, par l'intermédiaire de l'unité de combustion (5) et de l'échangeur thermique (4),
d) une unité de combustion (5), sachant que la sortie (18) de la zone de torréfaction (3) est en communication avec l'entrée (19, 20) de la zone de torréfaction (3), par l'intermédiaire de l'unité de combustion (5) et de l'échangeur thermique (4),
e) sachant qu'un flux de gaz de torréfaction (17), évacué par la sortie (18) de la zone de torréfaction (3), est brûlé dans l'unité de combustion (5) et que l'effluent gazeux en résultant est utilisé, dans l'échangeur thermique (4), pour le chauffage du flux de gaz de séchage (13) et est conduit dans la zone de torréfaction (3),
f) sachant que la zone de séchage (2) et la zone de torréfaction (3) sont dotées de deux circuits de gaz, qui sont séparés l'un de l'autre.

2. Dispositif selon la revendication 1, **caractérisé en ce que** l'échangeur thermique est doté d'une première entrée (4a) et d'une première sortie (4b) y reliée, ainsi que d'une deuxième entrée (4c) et d'une deuxième sortie (4d) y reliée, sachant que la première entrée (4a) est reliée à la sortie (14) de la zone de séchage (2) et la première sortie (4b) est reliée à l'entrée (15) de la zone de séchage (2), et sachant en outre que la deuxième entrée (4c) est reliée à la sortie (18) de la zone de torréfaction (3) par l'intermédiaire de l'unité de combustion (5) et que la première sortie (4b) est reliée à l'entrée (19, 20) de la zone de torréfaction (3).

3. Dispositif selon la revendication 1, **caractérisé en ce que** la zone de séchage (2) et / ou la zone de torréfaction (3) sont dotées de plusieurs soles disposées les unes au-dessus des autres.

4. Dispositif selon la revendication 1, **caractérisé en ce que**, pour le transfert du flux de matière carbonée, séchée, un dispositif de transfert mécanique est prévu entre la zone de séchage et la zone de torréfaction (2, 3).

5. Dispositif selon la revendication 4, **caractérisé en ce que** le dispositif de transfert (12) est étanche aux gaz entre la zone de séchage et la zone de torréfaction (2, 3) pour empêcher un mélange des deux circuits de gaz.

6. Dispositif selon la revendication 1, **caractérisé en ce que**, pour convoyer le flux de matière (10), le four à soles multiples est doté de dispositifs de transport, qui sont entraînés au moyen d'un arbre de commande, sachant que ledit arbre de commande est divisé entre la zone de séchage et la zone de torréfaction (2, 3) et est équipé chaque fois d'un propre entraînement, afin que les temps de séjour du flux de matière carbonée (10) puissent être modifiés dans les deux zones indépendamment les uns des autres, au moyen de la vitesse de rotation respective.

7. Procédé pour le séchage et la torréfaction d'au moins un flux de matière carbonée (10) dans un four à soles multiples (1), sachant que
a) la biomasse est séchée dans une zone de séchage (2) au moyen d'un flux de gaz de séchage (13) et torréfiée ensuite dans une zone de torréfaction (3),
b) une partie du flux de gaz de séchage (13) contenant de la vapeur d'eau est évacuée de la zone de séchage et chauffé dans l'échangeur thermique (4) et est reconduit ensuite, au moins partiellement, dans la zone de séchage (2),
sachant que
c) une partie d'un flux de gaz de torréfaction (17), généré dans la zone de torréfaction (3), est évacué de la zone de torréfaction (3) et conduit à une unité de combustion (5), aux fins de combustion de l'effluent gazeux ainsi produit, et est utilisé pour chauffer le flux de gaz de séchage dans l'échangeur thermique (4) et introduit dans la zone de torréfaction (3),
d) la zone de séchage (2) et la zone de torréfaction (3) sont exploitées avec deux circuits de gaz, qui sont séparés l'un de l'autre.

8. Procédé selon la revendication 7, **caractérisé en ce que** la zone de séchage (2) est exploitée en flux continu.

9. Procédé selon la revendication 7, **caractérisé en ce que** la zone de torréfaction (3) est exploitée à contre-courant.

10. Procédé selon la revendication 7, **caractérisé en ce que** le flux de gaz de séchage (13) contenant de la vapeur d'eau est surchauffé dans l'échangeur thermique (4) et que la quantité de vapeur recyclée dans le circuit de chauffage est si grande qu'il s'établit une atmosphère inerte avec une teneur en oxygène de < 10 %.

11. Procédé selon la revendication 7, **caractérisé en ce que** la quantité d'effluent gazeux gaz, introduite dans la zone de torréfaction (3), est si grande qu'il s'établit, dans la zone de torréfaction (3), une atmosphère inerte avec une teneur en oxygène de < 10 %.

12. Procédé selon la revendication 7, **caractérisé en ce que** la température de l'effluent gazeux, introduit Dana la zone de torréfaction (3), est supérieure à 300 « C, et que la température du flux de gaz de séchage recyclé est située dans une plage allant de 150 °C à 300 °C.

13. Procédé selon la revendication 7, **caractérisé en ce que** le flux de gaz de torréfaction (17), avant d'être conduit à l'unité de combustion, est chargé dans un condensateur (28), dans lequel les composants condensables sont précipités, au moins partiellement, tandis que les composants non condensables sont brûlés dans l'unité de combustion (5).

14. Procédé selon la revendication 7, **caractérisé en ce que**, dans la zone de séchage et / ou dans la zone de torréfaction (2, 3), la température et / ou le flux de gaz et / ou la quantité de gaz et / ou la pression sont mesurés et utilisés pour la régulation du temps de séjour de la matière dans las deux zones.

15. Procédé selon la revendication 7, **caractérisé en ce que** le temps de séjour dans la zone de séchage et dans la zone de torréfaction (2, 3) est réglé par la modification du nombre de soles, par la réduction des surfaces de soles, par modification de la connception et du nombre des dispositifs de transport ou par variation de la vitesse de rotation des dispositifs de transport.
